# EUROPEAN PATENT APPLICATION

(11) **EP 3 481 110 A1**
(43) Date of publication of application: **08.05.2019**
(21) Application number: 17831338.3
(22) Date of filing: 19.07.2017
(51) Int. Cl.: H04W 48/14, H04W 48/10, H04W 68/00

(54) **METHOD AND APPARATUS FOR REQUESTING SIB OF INTEREST**

(30) Priority: 20.07.2016 US 201662364845 P; 20.07.2016 US 201662364850 P; 21.07.2016 US 201662364859 P; 25.07.2016 US 201662366606 P; 26.07.2016 US 201662366643 P
(71) Applicant: LG Electronics Inc., Seoul 07336 (KR)
(72) Inventor: KIM, Sangwon, Seoul 06772 (KR); LEE, Youngdae, Seoul 06772 (KR); LEE, Jaewook, Seoul 06772 (KR)
(74) Representative: Maikowski & Ninnemann Patentanwälte Partnerschaft mbB
(86) International application number: PCT/KR2017/007756
(87) International publication number: WO 2018/016865

(57) **Abstract**

Provided are a method for requesting a system information block (SIB) desired to be received by a terminal in a wireless communication system, and an apparatus for supporting the same. The method may comprise: a step of determining an SIB unobtainable without a request of the terminal among SIBs desired to be received by the terminal; and a step of requesting the determined SIB from a network. Provided are a method for requesting a system information block (SIB) of interest by a terminal in a wireless communication system, and an apparatus for supporting the same. The method may comprise: a step of determining, as an SIB of interest, an SIB not obtainable without a request of the terminal within a predetermined time interval; and a step of requesting the determined SIB of interest from a network.

## Description

### BACKGROUND OF THE INVENTION

### Field of the invention

The present invention relates to a wireless communication system and, more particularly, to a method for requesting, by a user equipment (UE), a system information block (SIB) of interest and an apparatus for supporting the same.

### Related Art

In order to meet the demand for wireless data traffic soring since the 4th generation (4G) communication system came to the market, there are ongoing efforts to develop enhanced 5th generation (5G) communication systems or pre-5G communication systems. For the reasons, the 5G communication system or pre-5G communication system is called the beyond 4G network communication system or post long-term evolution (LTE) system.

The 5G communication system is considered to be implemented in higher frequency (mmWave) bands, e.g., 60 GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beamforming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

System information refers to essential information for communication between a terminal and a base station. In 3GPP LTE, the system information is divided into an MIB (Master Information Block) and an SIB (System Information Block). The MIB is the most essential information. The SIB is subdivided into SIB-x forms according to its importance or cycle. The MIB is transmitted through a PBCH (Physical Broadcast Channel) which is a physical channel. The SIB is common control information and is transmitted through a PDCCH differently from the MIB.

### SUMMARY OF THE INVENTION

The number of system information blocks (SIBs) is steadily increasing. It is required to use radio resources in order to broadcast SIBs. Thus, an increase in the number of SIBs inevitably leads to an increase in the quantity of radio resources needed to broadcast SIBs. In transmitting a constantly increasing quantity of system information to a user equipment (UE), it is necessary to propose a system information acquiring method using efficiently utilizing radio resources.

According to one embodiment, there is provided a method for requesting a system information block (SIB) that a user equipment (UE) desires to receive in a wireless communication system. The method may include: determining an SIB that is unobtainable without a request from the UE among SIBs that the UE desires to receive; and requesting the determined SIB to a network.

The method may further include receiving an SIB broadcast notification indicating whether the SIB that the UE desires to receive is broadcast. The method may further include checking whether the SIB that the UE desires to receive is broadcast within a certain time period based on the received SIB broadcast notification. When it is determined that the SIB that the UE desires to receive is not broadcast within the certain time period based on the received SIB broadcast notification, the SIB that the UE desires to receive may be determined to be the SIB that is unobtainable without the request from the UE.

The method may further include receiving the requested SIB from the network.

According to another embodiment, there is provided a method for requesting, by a UE, an SIB of interest in a wireless communication system. The method may include: determining an SIB that is unobtainable without a request from the UE within a certain time period as an SIB of interest; and requesting the determined SIB of interest to a network.

The UE may not have the SIB of interest that is valid.

The SIB of interest may be an SIB relevant to a particular feature. The UE may support the particular feature. The UE may be interested in the particular feature. The particular feature may be at least one of a multicast broadcast multimedia service (MBMS), single-cell point-to-multipoint (SCP), extended access barring (EAB), device-to-device (D2D), a home eNodeB (HeNB), and wireless local area network interworking.

The SIB of interest may be an SIB relevant to a particular RRC state of the UE. The particular RRC state may be any one of an RRC_IDLE state, an RRC_INACTIVE state, and an RRC_CONNECTED state. The method may further include entering the particular RRC state, wherein, among SIBs essential for the particular RRC state that the UE enters, the SIB that is unobtainable without the request from the UE within the certain time period may be determined to be the SIB of interest.

The SIB of interest may be an SIB that is essential to any UE. The essential SIB may be at least one of an MIB and an SIB relevant to a public warning system.

The method may further include changing a serving cell, wherein when the serving cell is changed, the determined SIB of interest may be requested to the network.

The method may further include receiving an SIB broadcast notification indicating whether the SIB is broadcast. The method may further include checking whether the SIB is broadcast within the certain time period based on the received SIB broadcast notification. When it is determined that the SIB is not broadcast within the certain time period based on the received SIB broadcast notification, the SIB may be determined to be the SIB of interest.

The method may further include receiving the requested SIB of interest from the network.

According to still another embodiment, there is provided a user equipment (UE) for requesting a system information block (SIB) of interest in a wireless communication system. The UE may include: a memory; a transceiver, and a processor to connect the memory and the transceiver, wherein the processor may be configured to: determine an SIB that is unobtainable without a request from the UE within a certain time period as an SIB of interest; and control the transceiver to request the determined SIB of interest to a network.

A UE can efficiently receive an SIB.

### BRIEF DESCRIPTION OF THE DRAWINGS

FIG. 1 shows LTE system architecture.
FIG. 2 shows a control plane of a radio interface protocol of an LTE system.
FIG. 3 shows a user plane of a radio interface protocol of an LTE system.
FIG. 4 shows an example of transmitting a master information block (MIB), system information block 1 (SIB1), and other SIBs.
FIG. 5 shows an update of system information.
FIG. 6 illustrates a procedure in which a UE requests an SIB of interest according to one embodiment of the present invention.
FIG. 7 illustrates a procedure in which a UE requests an SIB of interest based on an SIB broadcast notification according to one embodiment of the present invention.
FIG. 8 illustrates a procedure in which a UE requests the transmission of an O-SIB based on an O-SIB broadcast notification according to one embodiment of the present invention.
FIG. 9 illustrates scheduling information included in an O-SIB broadcast notification according to one embodiment of the present invention.
FIG. 10 illustrates a method in which a UE obtains an O-SIB when a broadcast type included in an O-SIB broadcast notification indicates an immediate broadcast according to one embodiment of the present invention.
FIG. 11 illustrates a method in which a UE obtains an O-SIB when a broadcast type included in an O-SIB broadcast notification indicates a broadcast in a next broadcast period according to one embodiment of the present invention.
FIG. 12 illustrates a method in which a UE obtains an O-SIB according to SI periodicity according to one embodiment of the present invention.
FIG. 13 is a block diagram illustrating a method in which a UE requests an SIB that the UE desires to receive according to one embodiment of the present invention.
FIG. 14 is a block diagram illustrating a method in which a UE requests an SIB of interest according to one embodiment of the present invention.
FIG. 15 is a block diagram illustrating a wireless communication system according to the embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE. 5G is an evolution of the LTE-A.

For clarity, the following description will focus on LTE-A/5G. However, technical features of the present invention are not limited thereto.

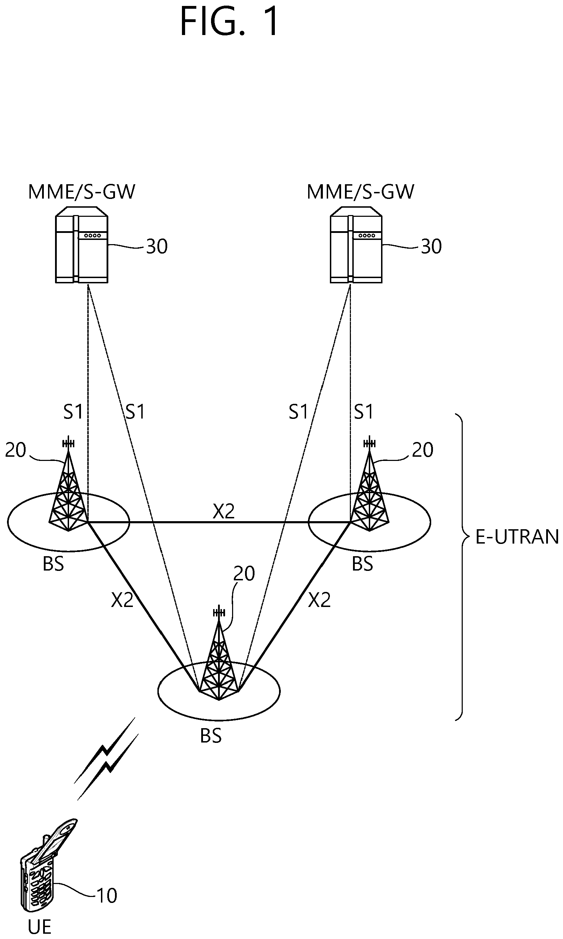

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), a base transceiver system (BTS), an access point, etc. One eNB 20 may be deployed per cell. There are one or more cells within the coverage of the eNB 20. A single cell is configured to have one of bandwidths selected from 1.25, 2.5, 5, 10, and 20 MHz, etc., and provides downlink or uplink transmission services to several UEs. In this case, different cells can be configured to provide different bandwidths.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) which is in charge of control plane functions, and a system architecture evolution (SAE) gateway (S-GW) which is in charge of user plane functions. The MME/S-GW 30 may be positioned at the end of the network and connected to an external network. The MME has UE access information or UE capability information, and such information may be primarily used in UE mobility management. The S-GW is a gateway of which an endpoint is an E-UTRAN. The MME/S-GW 30 provides an end point of a session and mobility management function for the UE 10. The EPC may further include a packet data network (PDN) gateway (PDN-GW). The PDN-GW is a gateway of which an endpoint is a PDN.

The MME provides various functions including non-access stratum (NAS) signaling to eNBs 20, NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW 30 will be referred to herein simply as a "gateway," but it is understood that this entity includes both the MME and S-GW.

Interfaces for transmitting user traffic or control traffic may be used. The UE 10 and the eNB 20 are connected by means of a Uu interface. The eNBs 20 are interconnected by means of an X2 interface. Neighboring eNBs may have a meshed network structure that has the X2 interface. The eNBs 20 are connected to the EPC by means of an S1 interface. The eNBs 20 are connected to the MME by means of an SI-MME interface, and are connected to the S-GW by means of S1-U interface. The S1 interface supports a many-to-many relation between the eNB 20 and the MME/S-GW.

The eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

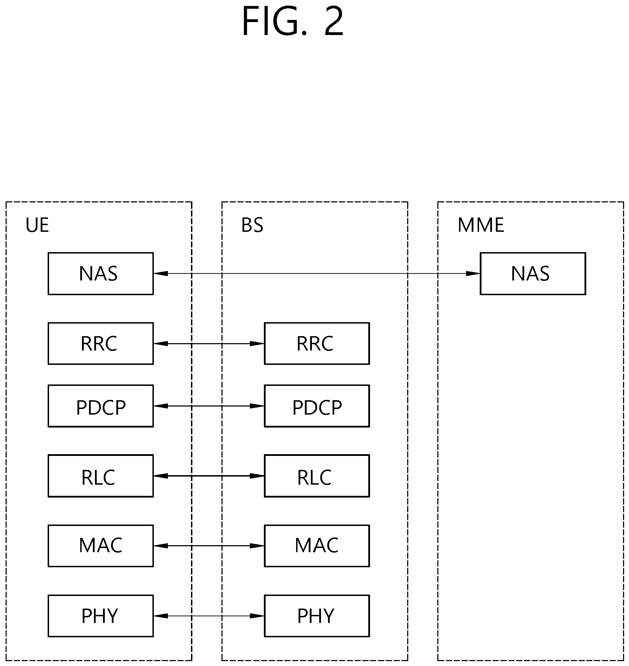

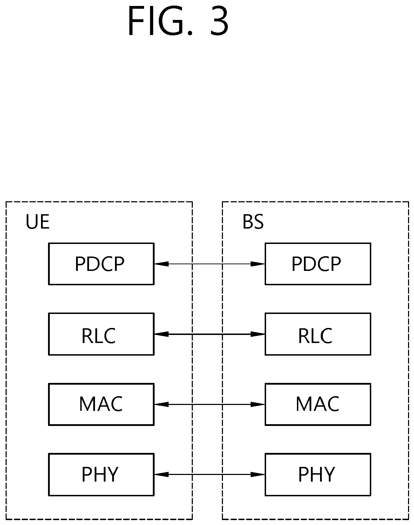

FIG. 2 shows a control plane of a radio interface protocol of an LTE system. FIG. 3 shows a user plane of a radio interface protocol of an LTE system.

Layers of a radio interface protocol between the UE and the E-UTRAN may be classified into a first layer (L1), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RLC layer belongs to the L2. The RLC layer provides a function of adjusting a size of data, so as to be suitable for a lower layer to transmit the data, by concatenating and segmenting the data received from an upper layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, can be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A Non-Access Stratum (NAS) layer placed over the RRC layer performs functions, such as session management and mobility management.

Referring to FIG. 2, the RLC and MAC layers (terminated in the eNB on the network side) may perform functions such as scheduling, automatic repeat request (ARQ), and hybrid automatic repeat request (HARQ). The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

Referring to FIG. 3, the RLC and MAC layers (terminated in the eNB on the network side) may perform the same functions for the control plane. The PDCP layer (terminated in the eNB on the network side) may perform the user plane functions such as header compression, integrity protection, and ciphering.

### Hereinafter, system information will be described.

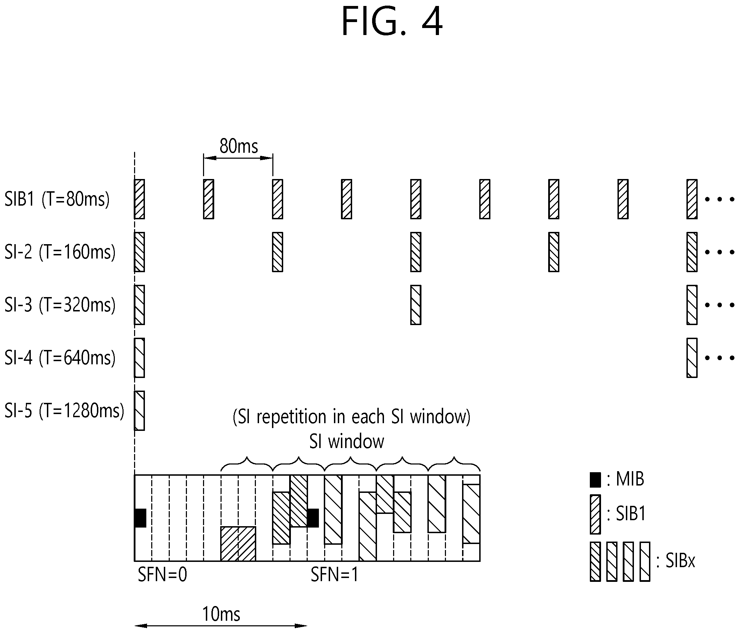

FIG. 4 shows an example of transmitting a master information block (MIB), system information block 1 (SIB1), and other SIBs.

An LTE cell broadcasts basic parameters necessary for the operation of an IDLE_MODE UE and a CONNECTED_MODE UE via a plurality of separate information blocks. Examples of information blocks include an MIB, SIB1, SIB2, and other SIBs (SIBn).

The MIB includes the most essential parameters needed for a UE to access a cell. Referring to FIG. 4, an MIB message is broadcast through a BCH according to a periodicity of 40 ms, and MIB transmission is repeated in all radio frames within the periodicity of 40 ms. The UE receives an SIB message using the parameters received via the MIB.

There are different types of SIBs.

SIB1 includes pieces of information associated with cell access, and particularly includes scheduling information on other SIBs (SIB2 to SIBn) than SIB1. SIBs having the same transmission periodicity among the SIBs other than SIB1 are transferred via the same system information (SI) message. Thus, scheduling information includes a mapping relationship between each SIB and an SI message. An SI message is transmitted within an SI window in a time domain, and each SI message is associated with one SI window. Since SI windows for different pieces of SI do not overlap, only one SI message is transmitted within an SI window. Thus, scheduling information includes the duration of an SI window and an SI transmission periodicity. Time/frequency for transmitting an SI message is determined by dynamic scheduling by a BS. SIB1 is broadcast through a downlink shared channel (DL SCH) according to a periodicity of eight radio frames (that is, 80-ms periodicity), and SIB1 is repeatedly retransmitted on a fifth subframe of an SFN-mod-2 radio frame within the 80-ms periodicity.

SIB2 includes necessary information for a UE to access a cell. SIB2 includes information on an uplink cell bandwidth, a random access parameter, and an uplink power control parameter.

SIB3 includes cell reselection information. SIB4 includes frequency information on a serving cell and intra-frequency information on a neighboring cell for cell reselection. SIB5 includes frequency information on a different E-UTRA and inter-frequency information on a neighboring cell for cell reselection. SIB6 includes frequency information on a UTRA and information on a UTRA neighboring cell for cell reselection. SIB7 includes frequency information on a GERAN for cell reselection. SIB8 includes information on a neighboring cell.

SIB9 includes a Home eNodeB (HeNB) identifier (ID). SIB10 to SIB12 include a public warning message, for example, for earthquake warning. SIB14 is used to support enhanced access barring and controls UEs to access a cell. SIB15 includes information needed to receive an MBMS at contiguous carrier frequencies. SIB16 include GPS time and coordinated universal time (UTC)-related information. SIB17 includes RAN auxiliary information.

Not all SIBs are always required to be present. For example, SIB9 is not needed in a mode where a wireless carrier establishes an HeNB, while SIB13 is not needed if a cell provides no MBMS.

System information is commonly applied to all UEs accessing a cell, and UEs need to always maintain up-to-date system information to perform an appropriate operation. When system information is changed, UEs need to know in advance the time the BS transmits new system information. In order that a BS and a UE mutually recognize a radio frame period for transmitting new system information, the concept of BCCH modification period is introduced in "3GPP TS 36.331 v9.3.0," which is described in detail.

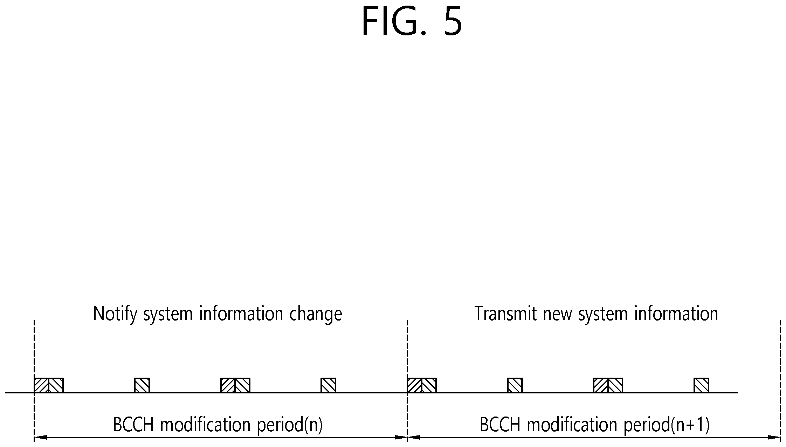

FIG. 5 shows an update of system information.

Referring to FIG. 5, a BS, which intends to update system information in an (n+1)th modification period, notifies in advance UEs of an update of system information in an nth modification period. A UE, which is notified the update of the system information in the nth modification period, receives and applies new system information at the very beginning of the (n+1)th modification period. When an update of system information is scheduled, the BS includes a system information modification indicator in a paging message. Generally, a paging message is a message received by an idle-mode UE. However, since an update of system information is notified through a paging message, a connected-mode UE also needs to receive a paging message at times and to identify an update of system information.

The number of system information blocks (SIBs) is steadily increasing. It is required to use radio resources in order to broadcast SIBs. Thus, an increase in the number of SIBs inevitably leads to an increase in the quantity of radio resources needed to broadcast SIBs. To solve this problem, a new type of system information is proposed. The new type of system information is not always broadcast by a network but may be broadcast from the network only when a UE requests the transmission of an SIB. Alternatively, the new type of system information may be transmitted to a UE through dedicated signaling only when the UE requests the transmission of an SIB.

Hereinafter, a method for determining an SIB of interest and requesting an SIB of interest and an apparatus for supporting the same will be described in detail according to one embodiment of the present invention.

In this specification, the new type of system information may be referred to as on-demand system information (OSI) or an on-demand system information block (O-SIB). On the other hand, system information that is always broadcast periodically may be referred to as a normal system information block (N-SIB). A UE can receive an O-SIB only when requesting the transmission of the O-SIB, but can periodically receive an N-SIB without a request.

In this specification, for the convenience of explanation, SIBs may be classified into SIBs belonging to category 1, category 2, and category 3.

SIBs belonging to category 1 may be SIBs relevant to a particular feature and/or a particular function. SIBs belonging to category 1 may be SIBs that are essential only for a UE supporting a particular feature and/or a particular function. For example, SIBs belonging to category 1 may be SIBs relevant to at least one of a multicast broadcast multimedia service (MBMS), single-cell point-to-multipoint (SCP), extended access barring (EAB), device-to-device (D2D), a home eNodeB (HeNB), and wireless local area network interworking. For example, an SIB relevant to the MBMS may be an SIB that is essential only for a UE supporting the MBMS.

SIBs belonging to category 2 may be SIBs relevant to a particular RRC state. SIBs belonging to category 2 may be SIBs that are essential only for any UE in a particular RRC state regardless of the capability of the UE. For example, an SIB relevant to cell reselection may be essential only for an RRC_IDLE mode.

SIBs belonging to category 3 may be SIBs essential for any UE. That is, SIBs belonging to category 3 may be SIBs that are essential for any UE regardless of the RRC state of the UE or the capability of the UE. For example, an SIB belonging to category 3 may be an SIB relevant to a master information block (MIB) or a public warning system.

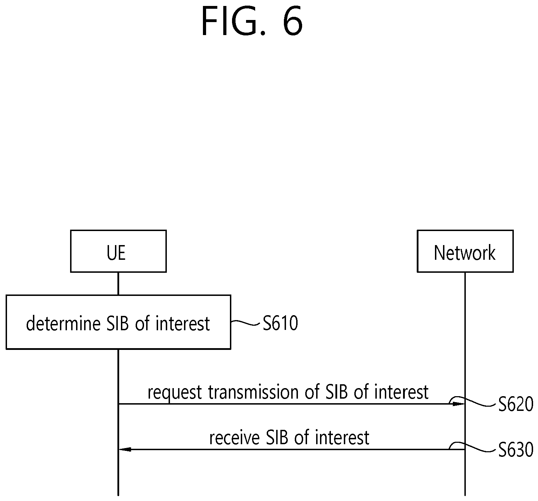

FIG. 6 illustrates a procedure in which a UE requests an SIB of interest according to one embodiment of the present invention.

Referring to FIG. 6, in step S610, the UE may determine an SIB of interest. There may be one or more SIBs of interest. When a system information request triggering condition is satisfied, the UE may determine the SIB of interest.
(1) SIBs belonging to category 1: For an SIB relevant to a particular feature and/or a particular function, the UE may consider the SIB to be part of the SIB of interest when at least one of the following conditions is satisfied.
   1) Condition 1: The UE does not have a valid SIB relevant to the particular feature and/or the particular function.
   2) Condition 2: The particular feature and/or the particular function is supported in the RRC state of the UE. For example, the UE may support features A and B. Feature A is supported in both RRC_CONNECTED and RRC_IDLE modes, whereas feature B is supported only in the RRC_CONNECTED mode. When the UE is in the RRC_IDLE mode, the UE considers an SIB relevant to feature A to be the SIB of interest but does not consider an SIB relevant to feature B to be the SIB of interest, because feature B is not supported in the RRC_IDLE mode.
   3) Condition 3: The UE cannot obtain the SIB relevant to the particular feature and/or the particular function without a request within a certain time. For example, the SIB relevant to the particular feature and/or the particular function is not periodically broadcast.
   4) Condition 4: UE capability can support the particular feature and/or the particular function. For example, an MBMS-capable UE may consider an MBMS-related SIB to be part of the SIB of interest.
   5) Condition 5: When the particular feature and/or the particular function is available only when a UE internal condition is satisfied, the UE internal condition is suitable to activate the particular feature and/or the particular function.
      For example, even though the UE capability can support WLAN interworking, when a WLAN module in the UE is powered off, the UE internal condition is not suitable to activate WLAN interworking. Thus, the UE may not consider a WLAN interworking-related SIB to be part of the SIB of interest. Alternatively, even though the UE capability can support WLAN interworking, when the WLAN module in the UE is connected to a non-WLAN interworking-capable AP and the AP has a higher priority than other APs according to the user preference, the UE may not consider the WLAN interworking-related SIB to be part of the SIB of interest. Further, even though the UE capability can support WLAN interworking, when the UE has no offloadable traffic to a WLAN, the UE may not consider the WLAN interworking-related SIB to be part of the SIB of interest.
      For example, when the UE capability can support WLAN interworking, the WLAN module in the UE is powered on, the WLAN module in the UE is connected to a WLAN interworking-capable AP, and the UE has offloadable traffic to the WLAN, the UE may consider the WLAN interworking-related SIB to be part of the SIB of interest. Further, when the UE capability can support WLAN interworking, the WLAN module in the UE is powered on, the WLAN module in the UE is not connected to any WLAN AP, and the UE has offloadable traffic to the WLAN, the UE may not consider the WLAN interworking-related SIB to be part of the SIB of interest. The WLAN AP may be an AP designated by a user.
   6) Condition 6: When the particular feature and/or the particular function is available only when the user is interested in the particular feature and/or the particular function, the user is interested in the particular feature and/or the particular function. For example, for MBMS or SCPTM, the UE may consider an MBMS or SCPTM-related SIB to be part of the SIB of interest only when the user is interested in the MBMS or SCPTM.

   For example, there may be two SIBs relevant to the particular feature and/or the particular function. A first SIB may be used to identify whether a user is interested in the particular feature and/or the particular function, and a second SIB may be used to perform the particular feature and/or the particular function. In this case, the UE may consider the first SIB relevant to the particular feature and/or the particular function to be part of the SIB of interest regardless of interest in the particular feature and/or the particular function. On the other hand, the UE may consider the second SIB relevant to the particular feature and/or the particular function to be part of the SIB of interest only when the UE is interested in the particular feature and/or the particular function. Hereinafter, a procedure in which the UE receives the first SIB and the second SIB relevant to the particular feature and/or the particular function will be described.
   - Step 1: The UE may consider a first SIB relevant to feature A to be part of the SIB of interest. Then, the UE may request the first SIB to the network.
   - Step 2: The UE may receive the requested first SIB from the network.
   - Step 3: The UE may determine whether the user is interested in feature A based on the first SIB.
   - Step 4: When feature A is determined to be of interest, the UE may consider a second SIB relevant to feature A to be part of the SIB of interest. The UE may request the second SIB relevant to feature A to the network.
   - Step 5: The UE may receive the requested second SIB from the network.

   Hereinafter, a procedure in which a UE supporting MBMS receives SIB15 and SIB13 relevant to MBMS will be described.
   - Step 1: The UE may consider MBMS-related SIB15 to be part of the SIB of interest. The UE may request a first SIB to the network. In step 1, it is not considered whether the UE is currently interested in receiving an MBMS service.
   - Step 2: The UE may receive requested SIB15 from the network.
   - Step 3: The UE may determine whether the user is interested in receiving the MBMS service based on SIB15.
   - Step 4: When it is determined that the user is interested in receiving the MBMS service, the UE may consider SIB13 to be part of the SIB of interest. The UE may request SIB13 to the network. Preferably, the UE may also request other MBMS-related information to the network. For example, the MBMS-related information may be an MBSFN area configuration.
   - Step 5: The UE may receive requested SIB13 from the network. The UE may receive the requested other MBMS-related information.
(2) SIBs belonging to category 2: For an SIB relevant to a particular RRC state, the UE may consider the SIB to be part of the SIB of interest when at least one of the following conditions is satisfied. The particular RRC state may be at least one of an RRC_IDLE state, an RRC_INACTIVE state, and an RRC_CONNECTED state.
   1) Condition 1: The UE does not have a valid SIB relevant to the particular RRC state.
   2) Condition 2: The UE cannot obtain the SIB relevant to the particular RRC state without a request within a certain time. For example, the SIB relevant to the particular RRC state is not periodically broadcast.
   3) Condition 3: The UE is in the particular RRC state.
   4) Condition 4: The UE considers that the UE will soon be in the particular RRC state. For example, when the UE enters the RRC_IDLE mode, if the UE does not have a valid version of the SIB essential for the RRC_IDLE mode, the UE may consider the SIB essential for the RRC_IDLE mode as part of the SIB of interest. For example, when the UE receives an RRC connection release message, if the UE does not have a valid version of the SIB essential for the RRC_IDLE mode, the UE may consider the SIB essential for the RRC_IDLE mode as part of the SIB of interest. For example, when the UE enters the RRC_CONNECTED mode, the UE may not consider the SIB essential only for the RRC_IDLE mode to be part of the SIB of interest any more. The SIB essential for the RRC_IDLE mode may be a cell reselection-related SIB.
(3) SIBs belonging to category 3: For an SIB that is essential for any UE, the UE may consider the SIB to be part of the SIB of interest when at least one of the following conditions is satisfied.
   1) Condition 1: The UE does not have a valid version of the essential SIB.
   2) Condition 2: The UE cannot obtain the essential SIB without a request within a certain time. For example, the essential SIB is not periodically broadcast.

Alternatively, the UE may not always consider the essential SIB as part of the SIB of interest. That is, regardless of whether condition 1 and/or condition 2 is satisfied, the UE may not consider the essential SIB to be part of the SIB of interest. In this case, the network can transmit the essential SIB without a request from the UE, and the UE can receive the essential SIB even though the UE has not requested the essential SIB.

Referring back to FIG. 6, in step S620, the UE may request the network to transmit the SIB. The SIB may be the SIB determined to be of interest by the UE in step S610.

When the RRC state of the UE is changed, the UE may request the network to transmit an SIB. For example, when the RRC state of the UE is changed from the RRC_CONNECTED mode to the RRC_IDLE mode, an SIB relevant to the RRC_IDLE mode may be considered to be part of the SIB of interest, and the UE may request the network to transmit the SIB relevant to the RRC_IDLE mode. For example, when the RRC state of the UE is changed from an RRC_SUSPENDED mode to the RRC_CONNECTED mode, an SIB relevant to the RRC_CONNECTED mode may be considered to be part of the SIB of interest, and the UE may request the network to transmit the SIB relevant to the RRC_CONNECTED mode.

When the UE receives an RRC state change command from the network, the UE may request the network to transmit an SIB. For example, upon receiving an RRC connection release message from the network, the UE may request a serving cell to transmit an SIB relevant to the RRC_IDLE state. For example, upon receiving an RRC connection suspend message from the network, the UE may request the serving cell to transmit an SIB relevant to the RRC_SUSPENDED state. For example, upon receiving an RRC connection setup message from the network, the UE may request the serving cell to transmit an SIB relevant to the RRC_CONNECTED state. For example, upon receiving an RRC connection setup complete message from the network, the UE may request the serving cell to transmit the SIB relevant to the RRC_CONNECTED state.

When a new SIB is added to a set of SIBs of interest, the UE may request the network to transmit the SIB. For example, when the UE becomes interested in an MBMS service, an SIB relevant to the MBMS service may be added to the set of SIBs of interest. Then, the UE may request the serving cell to transmit the SIB relevant to the MBMS service. For example, when the RRC state of the UE is changed from the RRC_CONNECTED mode to the RRC_IDLE mode, an SIB relevant to cell reselection may be added to the set of SIBs of interest. Then, the UE may request the serving cell to transmit the SIB relevant to cell reselection.

When the serving cell is changed, the UE may request the network to transmit an SIB. For example, when the UE performs cell reselection in the RRC_IDLE mode, the UE may request the changed serving cell to transmit the SIB of interest. For example, when the UE performs a handover in the RRC_CONNECTED mode, the UE may request the changed serving cell to transmit the SIB of interest. For example, if the UE performs a SCell change in the RRC_CONNECTED mode, the UE may request a changed SCell to transmit the SIB of interest.

When the UE detects an adjacent cell, the UE may request the network to transmit an SIB. For example, when the measurement result of a neighboring cell is better than a threshold value, the UE may request an SIB of the neighboring cell. Preferably, the UE may request the serving cell to transmit the SIB of the neighboring cell. After requesting the serving cell to transmit the SIB of the neighboring cell, the UE may receive the SIB of the neighboring cell from the serving cell.

Preferably, the UE may request the transmission of an SIB newly added to a set of SIBs of interest. For example, it is assumed that a set of SIBs of interest includes SIB A, SIB C, and SIB F when the UE last requested the network to transmit an SIB of interest. Thereafter, the RRC state of the UE has changed, SIB D has been newly added to the set of SIBs of interest, and SIB C and SIB F have been removed from the set of SIBs of interest. Therefore, the set of SIBs of interest has been changed to include SIB A and SIB D. Then, the UE can request the network to transmit SIB D only.

Referring back to FIG. 6, in step S630, the UE may receive the requested SIB of interest from the network.

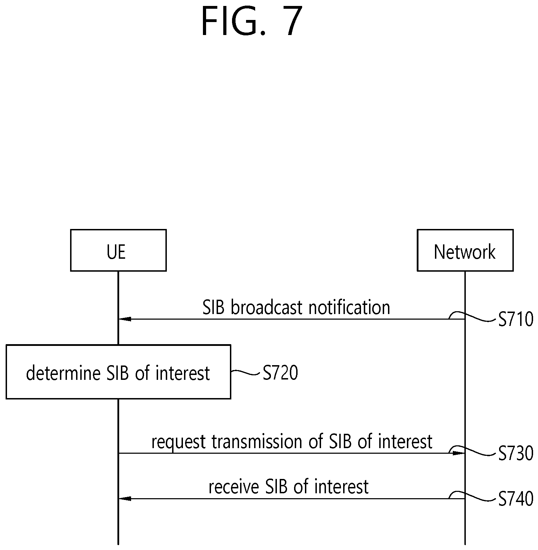

FIG. 7 illustrates a procedure in which a UE requests an SIB of interest based on an SIB broadcast notification according to one embodiment of the present invention.

Referring to FIG. 7, in step S710, the UE may receive an SIB broadcast notification. In this specification, an SIB broadcast notification may be used with the same meaning as an O-SIB broadcast notification. The SIB broadcast notification may indicate which SIB is broadcast among all SIBs transmitted by request from UE. One bit may be used for each SIB to indicate which SIB is broadcast. In addition, the SIB broadcast notification may include scheduling information. The scheduling information may include SI window length, the start of an SI window, and the period of an SI window. The scheduling information may be configured per SIB or SIB group. The SIB broadcast notification may be received through an SIB that is always periodically broadcast without a request of the UE.

For example, the SIB broadcast notification may include a bitmap. A first bit in the bitmap may indicate whether a first SIB is broadcast among all the SIBs transmitted by request from the UE. A second bit in the bitmap may indicate whether a second SIB is broadcast among all the SIBs transmitted by request from the UE. The value of each bit may be 0 or 1. A value of 0 may mean that an SIB corresponding to the bit is not broadcasted, and a value of 1 may mean that the SIB corresponding to the bit is broadcasted. Alternatively, a value of 1 may mean that an SIB corresponding to the bit is not broadcasted, and a value of 0 may mean that the SIB corresponding to the bit is broadcasted.

In step S720, the UE may determine an SIB of interest. There may be one or more SIBs of interest. When a system information request triggering condition is satisfied, the UE may determine the SIB of interest.
(1) SIBs belonging to category 1: For an SIB relevant to a particular feature and/or a particular function, the UE may consider the SIB to be part of the SIB of interest when at least one of the following conditions is satisfied.
   1) Condition 1: The UE does not have a valid SIB relevant to the particular feature and/or the particular function.
   2) Condition 2: The particular feature and/or the particular function is supported in the RRC state of the UE.
   3) Condition 3: The UE cannot obtain the SIB relevant to the particular feature and/or the particular function without a request within a certain time. It may be determined whether the UE can obtain the SIB relevant to the particular feature and/or the particular function without a request within the certain time based on the SIB broadcast notification received in step S710. For example, when the SIB broadcast notification indicates that the SIB relevant to the particular feature and/or the particular function is not broadcast, the UE may determine that the UE cannot obtain the SIB relevant to the particular feature and/or the particular function without a request within the certain time. For example, when the SIB broadcast notification indicates that the SIB relevant to the particular feature and/or the particular function is broadcast, the UE may identify whether the UE can obtain the SIB relevant to the particular feature and/or the particular function without a request within the certain time based on scheduling information corresponding to the SIB. Even though the SIB broadcast notification indicates that the SIB relevant to the particular feature and/or the particular function is broadcast, the UE may determine that the UE cannot obtain the SIB relevant to the particular feature and/or the particular function without a request within the certain time based on the scheduling information corresponding to the SIB.
   4) Condition 4: UE capability can support the particular feature and/or the particular function.
   5) Condition 5: When the particular feature and/or the particular function is available only when a UE internal condition is satisfied, the UE internal condition is suitable to activate the particular feature and/or the particular function.
   6) Condition 6: When the particular feature and/or the particular function is available only when the user is interested in the particular feature and/or the particular function, the user is interested in the particular feature and/or the particular function.
(2) SIBs belonging to category 2: For an SIB relevant to a particular RRC state, the UE may consider the SIB to be part of the SIB of interest when at least one of the following conditions is satisfied. The particular RRC state may be at least one of an RRC_IDLE state, an RRC_INACTIVE state, and an RRC_CONNECTED state.
   1) Condition 1: The UE does not have a valid SIB relevant to the particular RRC state.
   2) Condition 2: The UE cannot obtain the SIB relevant to the particular RRC state without a request within a certain time. It may be determined whether the UE can obtain the SIB relevant to the particular RRC state without a request within the certain time based on the SIB broadcast notification received in step S710. For example, when the SIB broadcast notification indicates that the SIB relevant to the particular RRC state is not broadcast, the UE may determine that the UE cannot obtain the SIB relevant to the particular RRC state without a request within the certain time. For example, when the SIB broadcast notification indicates that the SIB relevant to the particular RRC state is broadcast, the UE may identify whether the UE can obtain the SIB relevant to the particular RRC state without a request within the certain time based on scheduling information corresponding to the SIB relevant to the particular RRC state. Even though the SIB broadcast notification indicates that the SIB relevant to the particular RRC state is broadcast, the UE may determine that the UE cannot obtain the SIB relevant to the particular RRC state without a request within the certain time based on the scheduling information corresponding to the SIB relevant to the particular RRC state.
   3) Condition 3: The UE is in the particular RRC state.
   4) Condition 4: The UE considers that the UE will soon be in the particular RRC state.
(3) SIBs belonging to category 3: For an SIB that is essential for any UE, the UE may consider the SIB to be part of the SIB of interest when at least one of the following conditions is satisfied.
   1) Condition 1: The UE does not have a valid version of the essential SIB.
   2) Condition 2: The UE cannot obtain the essential SIB without a request within a certain time. It may be determined whether the UE can obtain the essential SIB without a request within the certain time based on the SIB broadcast notification received in step S710. For example, when the SIB broadcast notification indicates that the essential SIB is not broadcast, the UE may determine that the UE cannot obtain the essential SIB without a request within the certain time. For example, when the SIB broadcast notification indicates that the essential SIB is broadcast, the UE may identify whether the UE can obtain the essential SIB without a request within the certain time based on scheduling information corresponding to the essential SIB. Even though the SIB broadcast notification indicates that the essential SIB is broadcast, the UE may determine that the UE cannot obtain the essential SIB without a request within the certain time based on the scheduling information corresponding to the essential SIB.

Alternatively, the UE may not always consider the essential SIB as part of the SIB of interest. That is, regardless of whether condition 1 and/or condition 2 is satisfied, the UE may not consider the essential SIB to be part of the SIB of interest. In this case, the network can transmit the essential SIB without a request from the UE, and the UE can receive the essential SIB even though the UE has not requested the essential SIB.

Referring back to FIG. 7, in step S730, the UE may request a network to transmit the SIB. The SIB may be the SIB determined to be of interest by the UE in step S720. When the RRC state of the UE is changed, the UE may request the network to transmit an SIB. When the UE receives an RRC state change command from the network, the UE may request the network to transmit an SIB. When a new SIB is added to a set of SIBs of interest, the UE may request the network to transmit the SIB. When a serving cell is changed, the UE may request the network to transmit an SIB. When the UE detects an adjacent cell, the UE may request the network to transmit an SIB. Preferably, the UE may request the transmission of an SIB newly added to a set of SIBs of interest.

In step S740, the UE may receive the requested SIB of interest from the network.

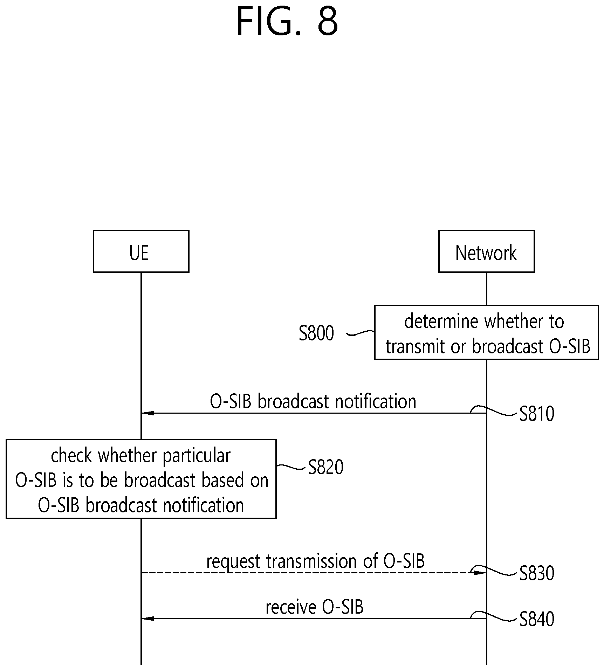

FIG. 8 illustrates a procedure in which a UE requests the transmission of an O-SIB based on an O-SIB broadcast notification according to one embodiment of the present invention.

Referring to FIG. 8, in step S800, regarding an O-SIB requested by the UE, a network may determine whether to transmit the O-SIB through broadcast signaling or dedicated signaling. For example, the broadcast signaling may be a BCCH, and the dedicated signaling may be a DCCH. When the network determines to broadcast the O-SIB, the network may transmit an O-SIB broadcast notification in order to notify the UE that the O-SIB is to be broadcast. Accordingly, not only the UE requesting the O-SIB but also other UEs not requesting the O-SIB can receive the O-SIB. The O-SIB broadcast notification may be provided to all UEs through a paging message or an N-SIB.

The O-SIB broadcast notification may indicate which O-SIB is broadcast among all O-SIBs. Specifically, one bit may be used for each O-SIB to indicate which O-SIB is broadcast. For example, the O-SIB broadcast notification may include a bitmap. A first bit in the bitmap may indicate whether a first O-SIB is broadcast among all the O-SIBs. A second bit in the bitmap may indicate whether a second O-SIB is broadcast among all the O-SIBs. The value of each bit may be 0 or 1. A value of 0 may mean that an O-SIB corresponding to the bit is not broadcasted, and a value of 1 may mean that the O-SIB corresponding to the bit is broadcasted. For example, assuming that there are five O-SIBs including O-SIB1 to O-SIB5, the O-SIB broadcast notification may include five bits. When the network determines to broadcast O-SIB1 and O-SIB2, the bitmap may be 11000. Alternatively, a value of 1 may mean that an SIB corresponding to the bit is not broadcasted, and a value of 0 may mean that the SIB corresponding to the bit is broadcasted.

Additionally, the O-SIB broadcast notification may include scheduling information.

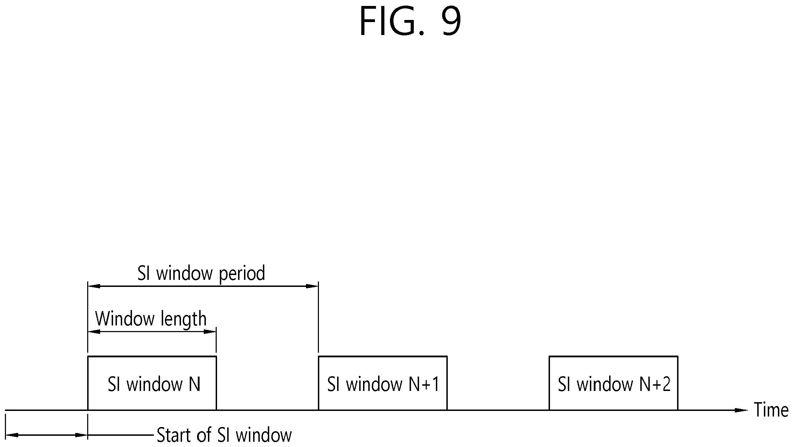

FIG. 9 illustrates scheduling information included in an O-SIB broadcast notification according to one embodiment of the present invention.

Referring to FIG. 9, the scheduling information may include SI window length, the start of an SI window, and the period of an SI window. The scheduling information may be configured per O-SIB. Alternatively, the scheduling information may be configured per O-SIB group. When the UE desires to receive an O-SIB, the UE needs to monitor a corresponding SI window. The scheduling information may be signaled via an N-SIB. In this case, the UE may not consider that the O-SIB is provided in all corresponding windows.

Additionally, the O-SIB broadcast notification may include a broadcast type. The broadcast type may be either an immediate broadcast or a broadcast in a next broadcast period.

Referring back to FIG. 8, in step S810, the UE may receive the O-SIB broadcast notification. The O-SIB broadcast notification may be received when the UE desires to receive a particular O-SIB.

In step S820, the UE may check whether the particular O-SIB is to be broadcast based on the O-SIB broadcast notification.

In step S830, when the O-SIB broadcast notification indicates that the particular O-SIB is not to be broadcast, the UE may request the network to transmit the particular O-SIB.

When the O-SIB broadcast notification indicates that the particular O-SIB is to be broadcast, the UE may not request the network to transmit the particular O-SIB. When the O-SIB broadcast notification indicates that the particular O-SIB is to be broadcast, step S830 may be omitted. The UE may check a broadcast type included in the O-SIB broadcast notification, thereby identifying whether the broadcast type of the particular O-SIB to be broadcast is an immediate broadcast or a broadcast in a next broadcast period.

In step S840, the UE may receive the O-SIB based on the scheduling information and/or the broadcast type included in the O-SIB broadcast notification.

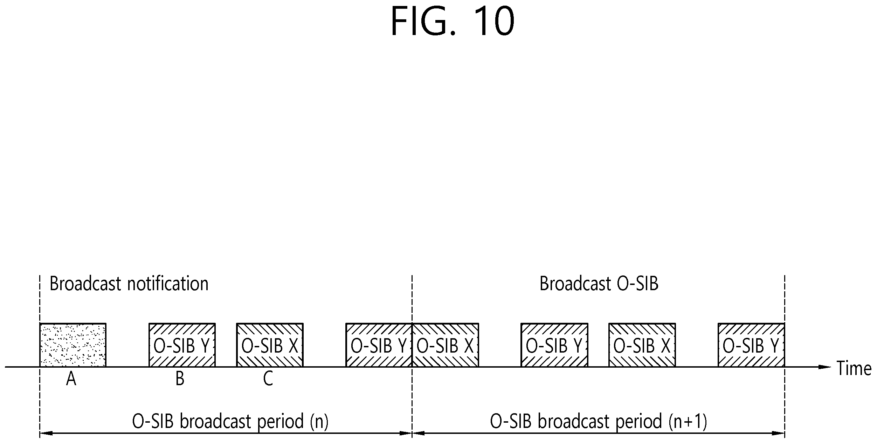

FIG. 10 illustrates a method in which a UE obtains an O-SIB when a broadcast type included in an O-SIB broadcast notification indicates an immediate broadcast according to one embodiment of the present invention.

When the broadcast type indicates the immediate broadcast, the UE may immediately read the particular O-SIB in a next SI window according to scheduling information. When the particular O-SIB is not received by the end of the SI window, the UE may repeatedly receive the particular O-SIB in a window following the SI window.

Referring to FIG. 10, when the UE desires to obtain O-SIB Y, the UE may receive an O-SIB broadcast notification in interval A. Then, the UE can receive O-SIB Y in interval B.

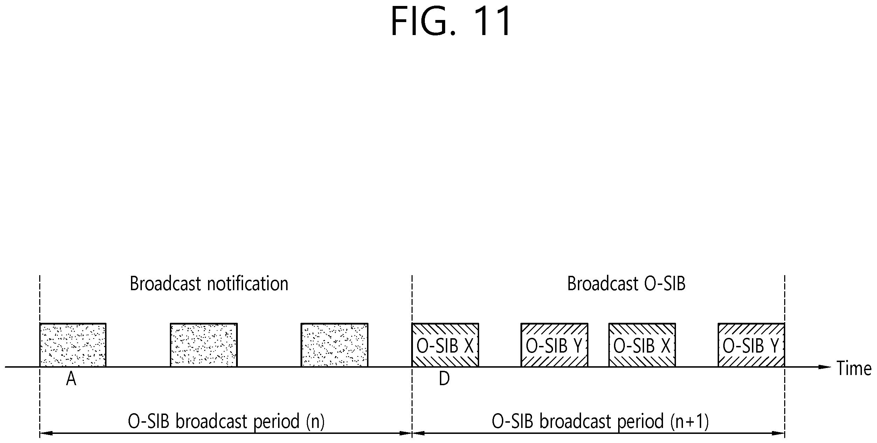

FIG. 11 illustrates a method in which a UE obtains an O-SIB when a broadcast type included in an O-SIB broadcast notification indicates a broadcast in a next broadcast period according to one embodiment of the present invention.

When the broadcast type indicates the broadcast in the next broadcast period, the UE may read the particular O-SIB in a next O-SIB broadcast period. When a network broadcasts all O-SIBs or some O-SIBs, the network may notify the UE of the broadcast of the O-SIBs. That is, an O-SIB broadcast notification may be completed in a current broadcast period. Then, the network may broadcast the O-SIBs in a next broadcast period. The UE may immediately obtain the particular O-SIB at the beginning of the next broadcast period. The broadcast period may be set for the UE through an N-SIB.

Referring to FIG. 11, when the UE desires to obtain O-SIB X, the UE may receive an O-SIB broadcast notification in interval A. Then, the UE may receive O-SIB X in interval D.

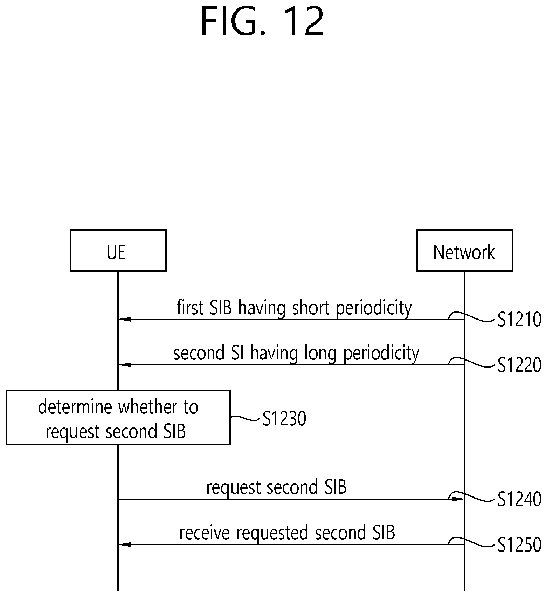

FIG. 12 illustrates a method in which a UE obtains an O-SIB according to SI periodicity according to one embodiment of the present invention.

According to the embodiment of the present invention, a BS may periodically broadcast an SI message, and a UE may request the BS to transmit an SI message if at least one of the following conditions is satisfied.
- Condition 1: An SI message is not transmitted within a certain period.
- Condition 2: The periodicity of an SI message is longer than a certain length.
- Condition 3: An SI message corresponds to a particular SIB type or a BR version of an SIB. For example, the particular SIB type may be a D2D SIB or an MBMS SIB.

A UE that is allowed to request SI delivery for a particular SIB or a particular SI message needs to belong to a particular category of UE capability (e.g. UE category 5). Alternatively, the UE does not need to belong to a particular category of UE capability (e.g., UE category 0).

According to the embodiment of the present invention, the BS may periodically broadcast a first SI message having first periodicity and a second SI message having second periodicity. The UE may request the BS to transmit the second SI message if at least one of the following conditions is satisfied.
- Condition 1: The second SI message is not transmitted within a certain period.
- Condition 2: The periodicity of the second SI message is longer than a certain length.
- Condition 3: The second SI message corresponds to a particular type. For example, the particular type may be a BR version of an SIB, a D2D SIB, or an MBMS SIB.

Preferably, the second periodicity may be longer than the first periodicity.

The UE may not be allowed to request the delivery of the first SI message but may be allowed to request the delivery of the second SI message. Preferably, a UE that is allowed to request SI delivery for a particular SIB or a particular SI message needs to belong to a particular category of UE capability (e.g. UE category 5). Alternatively, the UE does not need to belong to a particular category of UE capability (e.g., UE category 0).

Referring to FIG. 12, in step S1210, the UE may receive a first SIB having short periodicity from a network. The network may be a BS, an eNB, a gNB, or an RAN. In step S1220, the UE may receive a second SIB having long periodicity from the network.

In step S1230, the UE may determine whether to request the network to transmit the second SIB. When the second SIB is not transmitted within a certain period, the UE may determine to request the network to transmit the second SIB. When the periodicity of the second SIB is longer than a predefined specific length, the UE may determine to request the network to transmit the second SIB. When the second SIB corresponds to a particular type, such as a BR version of an SIB, a D2D SIB, or an MBMS SIB, the UE may determine to request the network to transmit the second SIB.

In step S1240, the UE may request the network to transmit the second SIB.

In step S1250, the UE may receive the requested second SIB from the network.

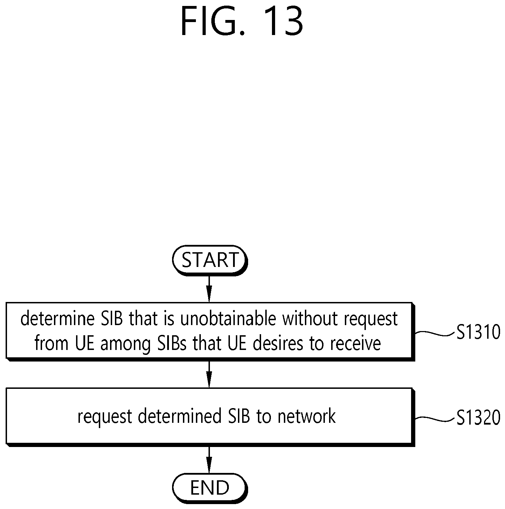

FIG. 13 is a block diagram illustrating a method in which a UE requests an SIB that the UE desires to receive according to one embodiment of the present invention.

Referring to FIG. 13, in step S1310, the UE may determine an SIB that is unobtainable without a request from the UE among SIBs that the UE desires to receive.

In step S1320, the UE may request the determined SIB to a network.

In addition, the UE may receive an SIB broadcast notification indicating whether the SIB that the UE desires to receive is broadcast. Further, the UE may check whether the SIB that the UE desires to receive is broadcast within a certain time period based on the received SIB broadcast notification. When it is determined that the SIB that the UE desires to receive is not broadcast within the certain time period based on the received SIB broadcast notification, the SIB that the UE desires to receive may be determined to be the SIB that is unobtainable without the request from the UE.

Additionally, the UE may receive the requested SIB from the network.

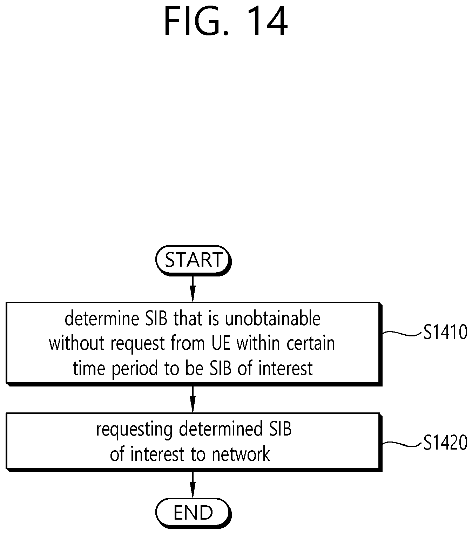

FIG. 14 is a block diagram illustrating a method in which a UE requests an SIB of interest according to one embodiment of the present invention.

Referring to FIG. 14, in step S1410, the UE may determine an SIB that is unobtainable without a request from the UE within a certain time period as an SIB of interest.

The UE may not have the SIB of interest that is valid.

The SIB of interest may be an SIB relevant to a particular feature. The UE may support the particular feature. The UE may be interested in the particular feature. The particular feature may include at least one of a multicast broadcast multimedia service (MBMS), single-cell point-to-multipoint (SCP), extended access barring (EAB), device-to-device (D2D), a home eNodeB (HeNB), and wireless local area network interworking.

The SIB of interest may be an SIB relevant to a particular RRC state of the UE. The particular RRC state may be any one of an RRC_IDLE state, an RRC_INACTIVE state, and an RRC_CONNECTED state. Additionally, the UE may enter the particular RRC state. Among SIBs essential for the particular RRC state that the UE enters, the SIB that is unobtainable without the request from the UE within the certain time period may be determined to be the SIB of interest.

The SIB of interest may be an SIB that is essential to any UE. The essential SIB may be at least one of an MIB and an SIB relevant to a public warning system.

In step S1420, the UE may request the determined SIB of interest to the network.

Additionally, the UE may change a serving cell. When the serving cell is changed, the determined SIB of interest may be requested to the network.

Further, the UE may receive an SIB broadcast notification indicating whether the SIB is broadcast. In addition, the UE may check whether the SIB is broadcast within the certain time period based on the received SIB broadcast notification. When it is determined that the SIB is not broadcast within the certain time period based on the received SIB broadcast notification, the SIB may be determined to be the SIB of interest.

In addition, the UE may receive the requested SIB of interest from the network.

According to one embodiment of the present invention, the UE may determine an SIB of interest and may request only the determined SIB of interest to the network. Further, the UE may determine whether to request an SIB based on an SIB broadcast notification and may efficiently receive a necessary SIB.

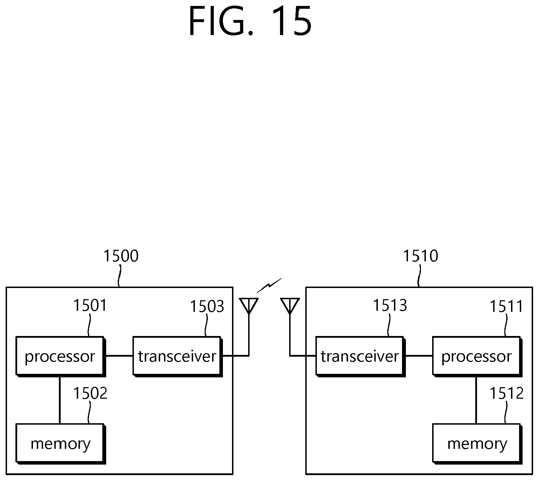

FIG. 15 is a block diagram illustrating a wireless communication system according to the embodiment of the present invention.

A BS 1500 includes a processor 1501, a memory 1502 and a transceiver 1503. The memory 1502 is connected to the processor 1501, and stores various information for driving the processor 1501. The transceiver 1503 is connected to the processor 1501, and transmits and/or receives radio signals. The processor 1501 implements proposed functions, processes and/or methods. In the above embodiment, an operation of the base station may be implemented by the processor 1501.

A UE 1510 includes a processor 1511, a memory 1512 and a transceiver 1513. The memory 1512 is connected to the processor 1511, and stores various information for driving the processor 1511. The transceiver 1513 is connected to the processor 1511, and transmits and/or receives radio signals. The processor 1511 implements proposed functions, processes and/or methods. In the above embodiment, an operation of the UE may be implemented by the processor 1511.

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The transceiver may include a base-band circuit for processing a wireless signal. When the embodiment is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.

Various methods based on the present specification have been described by referring to drawings and reference numerals given in the drawings on the basis of the aforementioned examples. Although each method describes multiple steps or blocks in a specific order for convenience of explanation, the invention disclosed in the claims is not limited to the order of the steps or blocks, and each step or block can be implemented in a different order, or can be performed simultaneously with other steps or blocks. In addition, those ordinarily skilled in the art can know that the invention is not limited to each of the steps or blocks, and at least one different step can be added or deleted without departing from the scope and spirit of the invention.

The aforementioned embodiment includes various examples. It should be noted that those ordinarily skilled in the art know that all possible combinations of examples cannot be explained, and also know that various combinations can be derived from the technique of the present specification. Therefore, the protection scope of the invention should be determined by combining various examples described in the detailed explanation, without departing from the scope of the following claims.

## Claims

1. A method for requesting a system information block (SIB) that a user equipment (UE) desires to receive in a wireless communication system, the method comprising:
determining an SIB that is unobtainable without a request from the UE among SIBs that the UE desires to receive; and
requesting the determined SIB to a network.

2. The method of claim 1, further comprising:
receiving an SIB broadcast notification indicating whether the SIB that the UE desires to receive is broadcast.

3. The method of claim 2, further comprising:
checking whether the SIB that the UE desires to receive is broadcast within a certain time period based on the received SIB broadcast notification.

4. The method of claim 3, wherein when it is determined that the SIB that the UE desires to receive is not broadcast within the certain time period based on the received SIB broadcast notification, the SIB that the UE desires to receive is determined to be the SIB that is unobtainable without the request from the UE.

5. The method of claim 1, further comprising:
receiving the requested SIB from the network.

6. A method for requesting, by a user equipment (UE), a system information block (SIB) of interest in a wireless communication system, the method comprising:
determining an SIB that is unobtainable without a request from the UE within a certain time period to be an SIB of interest; and
requesting the determined SIB of interest to a network.

7. The method of claim 6, wherein the UE does not have the SIB of interest that is valid.

8. The method of claim 6, wherein the SIB of interest is an SIB relevant to a particular feature.

9. The method of claim 6, wherein the UE supports the particular feature.

10. The method of claim 9, wherein the UE is interested in the particular feature.

11. The method of claim 10, wherein the particular feature is at least one of a multicast broadcast multimedia service (MBMS), single-cell point-to-multipoint (SCP), extended access barring (EAB), device-to-device (D2D), a home eNodeB (HeNB), and wireless local area network interworking.

12. The method of claim 6, wherein the SIB of interest is an SIB relevant to a particular RRC state of the UE, and the particular RRC state is any one of an RRC_IDLE state, an RRC_INACTIVE state, and an RRC_CONNECTED state.

13. The method of claim 12, further comprising:
entering the particular RRC state,
wherein, among SIBs essential for the particular RRC state that the UE enters, the SIB that is unobtainable without the request from the UE within the certain time period is determined to be the SIB of interest.

14. The method of claim 6, wherein the SIB of interest is an SIB that is essential to any UE, and the essential SIB is at least one of an MIB and an SIB relevant to a public warning system.

15. The method of claim 6, further comprising:
changing a serving cell,
wherein when the serving cell is changed, the determined SIB of interest is requested to the network.
